# EUROPEAN PATENT APPLICATION

(11) **EP 4 697 657 A1**
(43) Date of publication of application: **18.02.2026**
(21) Application number: 24758691.0
(22) Date of filing: 27.06.2024
(51) Int. Cl.: H04L 12/46

(54) **METHOD AND APPARATUS FOR IMPLEMENTING APPLICATION SERVICE IN SERVICE FUNCTION CHAIN PSEUDO-PROXY NETWORKING**

(71) Applicant: New H3C Security Technologies Co., Ltd., Hefei, Anhui 230088 (CN)
(72) Inventor: CHEN, Xingming, Beijing 100102 (CN)
(74) Representative: Grünecker Patent- und Rechtsanwälte PartG mbB
(86) International application number: PCT/CN2024/102116
(87) International publication number: WO 2026/000311

(57) **Abstract**

Embodiments of the present disclosure provide an application service implementation method and apparatus in service function chain masquerading proxy networking. In the embodiments, a switch is deployed between a service function forwarder (SFF) and a service function (SF), the switch and the SF are configured to support a plurality of virtual local area networks (VLANs), different VLANs supported by the SF are associated to corresponding virtual systems (Vsys) on the SF, a corresponding application service policy is configured for each of the Vsys, a VLAN identifier is carried on a packet sent by the SFF to the SF through the switch, the SF determines, based on the VLAN identifier carried in the packet, a virtual system Vsys associated with a VLAN corresponding to the VLAN identifier, and performs corresponding service processing on the packet according to an application service policy corresponding to the Vsys, so that different application services are provided on the same SF by combining multiple VLANs and Vsys on the SF, networking costs are reduced, and resource utilization of the SF is also improved.

## Description

### TECHNICAL FIELD

The present disclosure relates to the technology of network communication, and in particular, to an application service implementation method and apparatus in service function chain masquerading proxy networking.

### BACKGROUND

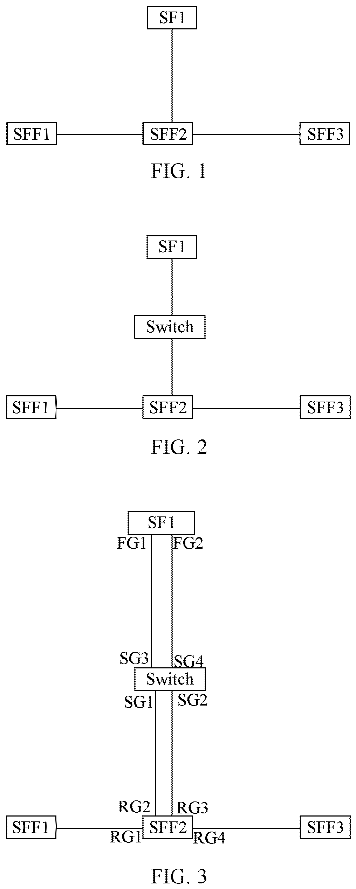

In service function chain masquerading proxy networking, a service function (SF) accesses a service function forwarder (SFF) in a bypass manner. In the service function chain masquerading proxy networking, the SF can identify a packet, for example, identify whether to continue to forward the packet in an SRv6 (Segment Routing Internet Protocol Version 6) service function chain (SFC). FIG. 1 shows an example of service function chain masquerading proxy networking. For example, the SF herein includes a firewall device. As shown in FIG. 1, in the service function chain masquerading proxy networking, SF1 accesses SFF1 in a bypass manner.

In the service function chain masquerading proxy networking, the SF only serves to implement an application service, such as a firewall security service, and the SFF serves to forward a packet along a service function chain. Specifically, the SFF forwards the packet to the SF according to SRv6 encapsulation information such as an SRv6 source router extension header (segment routing header, SRH). After receiving the packet, the SF performs corresponding service processing on the packet based on a configured application service, and then if it is identified that the packet needs to be further forwarded, the SF forwards the packet to the SFF, and the SFF continues to forward the packet along the SRv6 SFC.

In the service function chain masquerading proxy networking, the SF provides a single application service, and when two different application services need to be performed on the packet passing through the SRv6 SFC, it is necessary for each of two SFFs in the SRv6 SFC to bypass an SF to provide the corresponding application service. This adjustment results in increased networking costs. SF being a firewall device is taken as an example, each firewall device can only perform one type of firewall security service, and when two types of services (i.e., service 1 and service 2) need to be simultaneously applied to the packet passing through the SRv6 SFC, it is necessary to select two SFFs in the SRv6 SFC to bypass two firewall devices respectively to provide service 1 and service 2, which increases networking costs.

### SUMMARY

Embodiments of the present disclosure provide an application service implementation method and apparatus in service function chain masquerading proxy networking, so as to provide different application services on one SF by combining multiple VLANs and virtual systems (Vsys) on the SF.

An embodiment of the present disclosure provides an application service implementation method in service function chain masquerading proxy networking, where a switch is deployed between at least one node pair in the service function chain masquerading proxy networking, and the node pair includes a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the method includes:
receiving, by the SF through a first interface of the SF, a first packet forwarded by the switch, where the first packet carries a first VLAN identifier, the first VLAN identifier is determined when the switch receives, through a second interface, the first packet forwarded by the SFF to the SF, and the first VLAN identifier is an identifier of a first VLAN supported by the second interface; and
determining, by the SF, a first Vsys associated with the first VLAN identifier, and performing corresponding service processing on the first packet according to an application service policy corresponding to the first Vsys.

An embodiment of the present disclosure provides an implementation method in service function chain masquerading proxy networking, where a switch is deployed between at least one node pair in the service function chain masquerading proxy networking, and the node pair includes a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the method includes:
receiving, by the switch through a second interface, a first packet forwarded by the SFF to the SF; and
forwarding, by the switch, the first packet to the SF after adding a first VLAN identifier to the first packet based on the first VLAN supported by the second interface, so that the SF receives the first packet carrying the first VLAN identifier through a first interface of the SF and determines a first Vsys associated with the first VLAN identifier, and performs corresponding service processing on the first packet according to an application service policy corresponding to the first Vsys.

An embodiment of the present disclosure provides an application service implementation apparatus in service function chain masquerading proxy networking, where a switch is deployed between at least one node pair in the service function chain masquerading proxy networking, and the node pair includes a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the apparatus is applied to the SF, and the apparatus includes:
a first receiving unit, configured to receive, through a first interface of the SF, a first packet forwarded by the switch, where the first packet carries a first VLAN identifier, the first VLAN identifier is determined when the switch receives, through a second interface, the first packet forwarded by the SFF to the SF, and the first VLAN identifier is an identifier of a first VLAN supported by the second interface; and
a serving unit, configured to determine a first Vsys associated with the first VLAN identifier, and perform corresponding service processing on the first packet according to an application service policy corresponding to the first Vsys.

An embodiment of the present disclosure provides an application service implementation apparatus in service function chain masquerading proxy networking, where a switch is deployed between at least one node pair in the service function chain masquerading proxy networking, and the node pair includes a service function forwarder (SFF) and a service function (SF); the switch and the SF support same N virtual local area network (VLAN) identifiers, N being greater than 1; the SF is virtualized with virtual systems (Vsys), and each of the Vsys is associated with at least two VLAN identifiers supported by the SF; different Vsys are configured with different application service policies; and the apparatus includes:
a second receiving unit, configured to receive, through a second interface, a first packet forwarded by the SFF to the SF; and
a processing unit, configured to forward the first packet to the SF after adding a first VLAN identifier to the first packet based on the first VLAN supported by the second interface, so that the SF receives the first packet carrying the first VLAN identifier through a first interface of the SF and determines a first Vsys associated with the first VLAN identifier, and performs corresponding service processing on the first packet according to an application service policy corresponding to the first Vsys.

An embodiment of the present disclosure further provides an electronic device, including a processor and a machine-readable storage medium;
the machine-readable storage medium stores a machine-executable instruction executable by the processor; and
the processor is configured to execute the machine-executable instruction to implement any of the above methods.

An embodiment of the present disclosure further provides a machine-readable storage medium, storing a machine-executable instruction executable by a processor;
the machine-executable instruction is executed by the processor to implement any of the above methods.

As can be seen from the above technical solutions, in the embodiments of the present disclosure, a switch is deployed between a service function forwarder (SFF) and a service function (SF), the switch and the SF are configured to support a plurality of virtual local area networks (VLANs), different VLANs supported by the SF are associated to corresponding virtual systems (Vsys) on the SF, a corresponding application service policy is configured for each of the Vsys, a VLAN identifier is carried on a packet sent by the SFF to the SF through the switch, the SF determines, based on the VLAN identifier carried in the packet, a virtual system Vsys associated with a VLAN corresponding to the VLAN identifier, and performs corresponding service processing on the packet according to an application service policy corresponding to the Vsys, so that different application services are provided on the same SF by combining multiple VLANs and Vsys on the SF, networking costs are reduced, and resource utilization of the SF is also improved.

### BRIEF DESCRIPTION OF DRAWINGS

The accompanying drawings, which are incorporated in and constitute a part of this specification, illustrate embodiments consistent with the present disclosure, and together with the description serve to explain the principles of the present disclosure.
FIG. 1 is a structural diagram of service function chain masquerading proxy networking.
FIG. 2 is a structural diagram of service function chain masquerading proxy networking provided by an embodiment of the present disclosure.
FIG. 3 is a structural diagram of another service function chain masquerading proxy networking according to an embodiment of the present disclosure.
FIG. 4 is a flowchart of an application service implementation method in service function chain masquerading proxy networking according to an embodiment of the present disclosure.
FIG. 5 is a flowchart of another application service implementation method in service function chain masquerading proxy networking according to an embodiment of the present disclosure.
FIG. 6 is a structural diagram of an application service implementation apparatus in service function chain masquerading proxy networking according to an embodiment of the present disclosure.
FIG. 7 is a structural diagram of another application service implementation apparatus in service function chain masquerading proxy networking according to an embodiment of the present disclosure.
FIG. 8 is a structural diagram of an electronic device for implementing an application service implementation method in service function chain masquerading proxy networking according to an embodiment of the present disclosure.

### DETAILED DESCRIPTION

Illustrative embodiments will be described in detail herein, examples of which are illustrated in the accompanying drawings. When following description refers to the drawings, unless otherwise indicated, same numerals in different drawings indicate same or similar elements. The implementations described in the following illustrative embodiments do not represent all implementations consistent with the present disclosure. Rather, they are merely examples of apparatuses and methods consistent with some aspects of the present disclosure.

To enable those skilled in the art to better understand the technical solutions provided in the embodiments of the present disclosure, and enable the above objects, features, and advantages of the embodiments of the present disclosure to be more apparent and easy to understand, the technical solutions in the embodiments of the present disclosure are further described in detail below with reference to the accompanying drawings.

First, in an embodiment, a switch is deployed between at least one node pair in service function chain masquerading proxy networking. The node pair herein includes an SFF and an SF. As shown in FIG. 2, a switch is deployed between a node pair SFF2 and SF1 in this embodiment.

In this embodiment, the SF and the switch accessed by the SF support same N VLANs, N being greater than 1, each VLAN is a VLAN instance created on the SF and used for cross-VLAN forwarding, and different VLAN instances correspond to different VLAN identifiers.

During specific implementation, in this embodiment, N interfaces of the switch may be configured as layer 2 access ports, and one VLAN supported by each of the N interfaces is separately configured for the N interfaces, different interfaces support different VLANs, and a set of VLANs supported by the N interfaces are N VLANs supported by the switch. It should be noted that, to ensure packets in a same VLAN to be successfully forwarded from the switch, M interfaces of the switch further need to be configured as layer 2 trunk ports, and at least one supported VLAN is configured for each of the M interfaces respectively, to indicate that packets carrying identifiers of the supported VLANs are allowed to pass. Finally, one switch supporting N VLANs is implemented. Herein, M is less than or equal to N, and when M is less than N, it indicates that at least one of the M interfaces supports at least 2 of the N VLANs.

Taking N=2 as an example, identifiers of the 2 VLANs are respectively denoted as VLAN100 and VLAN200, in this embodiment, an interface SG1 of the switch for accessing the SFF is configured as a layer 2 access port, and the interface SG1 supports VLAN100. An interface SG2 of the switch for accessing the SFF is configured as a layer 2 access port, and the interface SG2 supports VLAN200. Correspondingly, an interface SG3 of the switch for accessing the SF may be further configured as a layer 2 trunk port, indicating that a packet carrying VLAN100 is allowed to pass, and an interface SG4 of the switch for accessing the SF may be configured as a layer 2 trunk port, indicating that a packet carrying VLAN200 is allowed to pass. Finally, the switch supporting VLANs with identifiers VLAN100 and VLAN200 is implemented. FIG. 3 is an example of configuration of a switch in the service function chain masquerading proxy networking.

Similarly, in this embodiment, M interfaces of the SF for accessing the switch may be configured as layer 2 trunk ports, and VLANs supported by the M interfaces are configured respectively. Any one of the M interfaces allows packets carrying identifier(s) of VLAN(s) supported by the interface to pass. Different interfaces in the M interfaces support different VLANs, and a set of VLANs supported by the M interfaces are N VLANs supported by the SF. Finally, one SF supporting N VLANs is implemented. As described above, M is less than or equal to N, and when M is less than N, it indicates that at least one of the M interfaces supports at least 2 of the N VLANs.

Still taking N=2 as an example, when identifiers of the 2 VLANs are respectively denoted as VLAN100 and VLAN200, in this embodiment, an interface FG1 of the SF for accessing the switch may be configured as a layer 2 trunk port, indicating that packets carrying VLAN100 are allowed to pass, and an interface FG2 of the SF for accessing the switch may be configured as a layer 2 trunk port, indicating that packets carrying VLAN200 are allowed to pass. Finally, the SF supporting VLANs with identifiers VLAN100 and VLAN200 is implemented. FIG. 3 illustrates a schematic configuration diagram of an SF in service function chain masquerading proxy networking.

In this embodiment, there are multiple virtualized virtual systems (Vsys) on the SF, and each Vsys is associated with at least two VLANs supported by the SF. For example, the SF supports 10 VLANs, corresponding to identifiers VLAN1 to VLAN10 respectively, and there are 5 virtualized Vsys (denoted as Vsys1 to Vsys5 respectively) on the SF, where each Vsys is associated with two VLANs, and different Vsys are associated with different VLANs. For example, Vsys1 is associated with VLANs corresponding to identifiers VLAN1 to VLAN2, Vsys2 is associated with VLANs corresponding to identifiers VLAN3 to VLAN4, Vsys3 is associated with VLANs corresponding to identifiers VLAN 5 to VLAN 6, Vsys4 is associated with VLANs corresponding to identifiers VLAN 7 to VLAN 8, and Vsys5 is associated with VLANs corresponding to identifiers VLAN 9 to VLAN 10.

In this embodiment, different Vsys are configured to correspond to different application service policies. For example, the 5 Vsys (i.e., Vsys1 to Vsys5) respectively correspond to different application service policies, and the application service policies are 5 types of firewall security services respectively. This embodiment is not specifically limited.

Based on the above description, the following describes the method provided in an embodiment of the present disclosure.

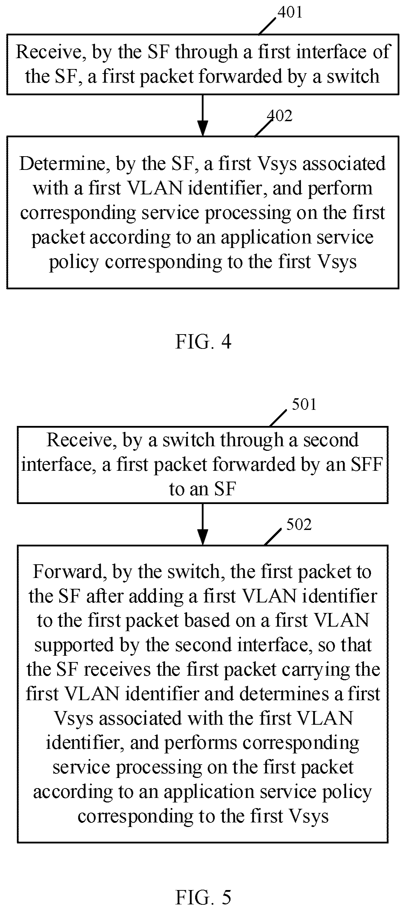

Referring to FIG. 4, FIG. 4 is a flowchart of an application service implementation method in service function chain masquerading proxy networking according to an embodiment of the present disclosure. As shown in FIG. 4, the process may be applied to an SF, including:
Step 401: receiving, by the SF through a first interface of the SF, a first packet forwarded by a switch.

In this embodiment, when the switch receives, through a second interface, the first packet forwarded by an SFF to the SF, and determines that the second interface is a layer 2 access port described above and is configured to support a first VLAN, the switch will forward the first packet to the SF through a sixth interface of the switch after adding an identifier of the first VLAN to the first packet. The sixth interface is a layer 2 trunk port described above, and allows a packet carrying a first VLAN identifier (that is, the first packet) to pass. Finally, the SF receiving the first packet forwarded by the switch is implemented.

Herein, the operation that the SFF forwards the first packet to the SF is determined by the SFF based on an SRv6 policy corresponding to a received packet, for example, the first packet. The SRv6 policy may be carried in the packet, or may be configured on the SFF. In addition to instructing the SFF to forward the packet to the SF, SRv6 policy may further indicate through which local interface the SFF to forward the packet.

It should be noted that, in this embodiment, when the SF receives the first packet through the first interface of the SF, the first interface is the layer 2 trunk port described above, and the first interface allows the packet carrying the first VLAN identifier (for example, the first packet) to pass.

In this embodiment, the first interface, the second interface, the sixth interface, the first VLAN identifier are named for ease of description, and are not intended to limit.

Step 402, determining, by the SF, a first Vsys associated with the first VLAN identifier, and performing corresponding service processing on the first packet according to an application service policy corresponding to the first Vsys.

In one embodiment, the first packet includes an SRv6 inner packet and an SRv6 header. Based on this, performing corresponding service processing on the first packet according to an application service policy corresponding to the first Vsys in step 402 includes:

when the SF is configured to perform the service processing on the SRv6 inner packet, performing the corresponding service processing on the SRv6 inner packet in the first packet according to the application service policy corresponding to the first Vsys;

when the SF is configured to perform the service processing on the SRv6 header, or when the SF is neither configured to perform the service processing on the SRv6 header nor the SRv6 inner packet, performing the corresponding service processing on the SRv6 header in the first packet according to the application service policy corresponding to the first Vsys.

By performing corresponding service processing on the SRv6 header or the SRv6 inner layer packet selectively, service processing efficiency can be improved.

Thus, the process shown in FIG. 4 is completed.

As can be seen from the process shown in FIG. 4, in the embodiments, a switch is deployed between a service function forwarder (SFF) and a service function (SF), the switch and the SF are configured to support a plurality of virtual local area networks (VLANs), different VLANs supported by the SF are associated to corresponding virtual systems (Vsys) on the SF, a corresponding application service policy is configured for each of the Vsys. A VLAN identifier is carried on a packet sent by the SFF to the SF through the switch. The SF determines, based on the VLAN identifier carried in the packet, a virtual system Vsys associated with a VLAN corresponding to the VLAN identifier, and performs corresponding service processing on the packet according to an application service policy corresponding to the Vsys, so that different application services are provided on the same SF by combining multiple VLANs and Vsys on the SF, networking costs are reduced, and resource utilization of the SF is also improved.

Still taking the firewall service described in the background as an example, according to the process shown in FIG. 4, only one firewall device is needed, different VLANs supported by the firewall device are associated to corresponding Vsys on the firewall device, and a corresponding application service policy is configured for each Vsys, so that different firewall security services can be executed on one firewall device according to user requirements, resource utilization of the firewall device is improved, and networking cost can also be reduced.

It should be noted that, in this embodiment, after the SF performs the corresponding service processing on the first packet, when determining that the first packet needs to be further forwarded to the SFF (that is, the first packet is passed), the SF replaces the first VLAN identifier carried in the first packet with a second VLAN identifier, and in this case, the first packet may be recorded as the second packet. Here, the second VLAN identifier is an identifier of a second VLAN associated with the first Vsys in addition to the first VLAN. Then, the SF sends the second packet through a third interface of the SF supporting the second VLAN. In this embodiment, the third interface is the layer 2 trunk port described above, and is configured to allow a packet carrying the second VLAN identifier to pass. Finally, the SF successfully sends the second packet through the third interface of the SF supporting the second VLAN. The switch will receive the second packet, where the switch will receive the second packet through a fourth interface of the switch supporting the second VLAN. The fourth interface is the layer 2 trunk port described above, and is configured to allow a packet carrying the second VLAN identifier to pass. When receiving the second packet, the switch removes the second VLAN identifier carried in the second packet and forwards the second packet to the SFF. Finally, the first packet is forwarded to the SFF. Then, the SFF may continue to forward the first packet based on the SRv6 SFC.

The above describes the method provided by the embodiment of the present disclosure from with respect to the SF, and the following describes the method provided by the embodiment of the present disclosure with respect to the switch.

Referring to FIG. 5, FIG. 5 is a flowchart of another application service implementation method in service function chain masquerading proxy networking according to an embodiment of the present disclosure. The process is applied to a switch. The process corresponds to the process shown in FIG. 4.

As shown in FIG. 5, the process may include following steps:
Step 501, receiving, by a switch through a second interface, a first packet forwarded by an SFF to an SF.

Herein, the second interface is configured as the layer 2 access port described above.

Step 502, forwarding, by the switch, the first packet to the SF after adding a first VLAN identifier to the first packet based on the first VLAN supported by the second interface, so that the SF receives the first packet carrying the first VLAN identifier and determines a first Vsys associated with the first VLAN identifier, and performs corresponding service processing on the first packet according to an application service policy corresponding to the first Vsys.

Optionally, in this embodiment, forwarding the first packet to the SF after adding a first VLAN identifier to the first packet includes: forwarding the first packet carrying the first VLAN identifier to the SF through a sixth interface of the switch supporting the first VLAN after adding the first VLAN identifier to the first packet. Herein, the sixth interface is configured as the layer 2 trunk port described above, and allows the first packet carrying the first VLAN identifier to pass, so that the switch successfully forwards the first packet carrying the first VLAN identifier from the switch to the SF.

In this embodiment, the switch may further receive a second packet through a fourth interface. Herein, after the SF performs the corresponding service processing on the first packet and determines to further forward the first packet to the SFF, the second packet is obtained by replacing the first VLAN identifier carried in the first packet with a second VLAN identifier associated with the first Vsys in addition to the first VLAN identifier; the fourth interface supports a second VLAN corresponding to the second VLAN identifier. Herein, the fourth interface the layer 2 trunk port as described above, and is configured to allow the second packet carrying the second VLAN identifier to pass. When the switch receives the second packet through the fourth interface, the switch determines that a fifth interface of the switch, in addition to the fourth interface, supports the second VLAN, and the fifth interface is configured as the layer 2 access port described above, the switch removes the second VLAN identifier carried in the second packet to obtain the first packet and forwards the first packet to the SFF through the fifth interface. Then, the SFF may continue to forward the first packet based on the SRv6 SFC.

Thus, the process shown in FIG. 5 is completed.

The following describes the embodiments of the present disclosure with reference to a process.

Still taking the networking shown in FIG. 3 as an example, as shown in FIG. 3, SFF1 forwards an SRv6 packet to SFF2.

After receiving the SRv6 packet, SFF2 determines, based on a SRnv6 policy matched with the SRv6 packet, that the SRv6 packet needs to be forwarded to SF1, and forwards the first packet through a local interface RG2. Herein, the first packet may be the SRv6 packet or a packet obtained by removing SRv6 encapsulation from the SRv6 packet. In addition, the SRv6 policy herein may include a policy that is locally configured by SFF2 and matches the SRv6 packet (for example, matching a source address and a destination address of the SRv6 packet, or a service type carried in the SRv6 packet), or a policy carried in the SRv6 packet. The SRv6 policy indicates an output interface such as the RG2 described above.

After receiving the first packet through a local SG1 interface, the switch determines that the SG1 interface supports VLAN100, and carries VLAN100 in the first packet.

When a local SG3 interface of the switch allows the packet carrying VLAN100 to pass, the switch forwards the first packet carrying VLAN100 through the local SG3 interface.

SF1 (which may be a firewall device) receives, through a local FG1 interface, the first packet carrying VLAN100, and determines a Vsys associated with VLAN100 based on VLAN100 (e.g., Vsys1), and performs service processing (the content of the first packet here does not change in any way, SF1 only performs service processing and does not change the content of the first packet) on the first packet based on an application service configured for Vsys1, for example, a security service.

After SF1 performs the service processing on the first packet based on the application service (e.g., a security service) configured for Vsys1, if SF1 determines to pass the first packet based on a result of the service processing, VLAN100 carried in the first packet is replaced with another VLAN identifier associated with Vsys1, that is, VLAN200, at this time, the first packet can be referred as the second packet. The SF1 determines that a local FG2 interface allows the packet carrying the VLAN200 to pass, and forwards the second packet through the local FG2 interface. Certainly, if SF1 determines, based on a result of the service processing, that the first packet is prohibited to pass, SF1 directly discards the first packet.

After receiving the second packet through a local SG4 interface, the switch determines, based on the VLAN200 carried in the second packet, that only a local SG2 interface allows the VLAN200 to pass, and the SG2 interface is a layer 2 access port, the switch removes the VLAN200 of the second packet to recover the first packet. Then, the first packet is forwarded through the SG2 interface.

SFF2 receives the first packet through a local RG3 interface, and forwards the first packet according to the SRv6 service chain in a normal procedure.

According to the above embodiment, even if a new application service is added, in this embodiment, a Vsys corresponding to the newly added application service is virtualized on the SF (the Vsys is configured with an application service policy corresponding to the newly added application service), an identifier of a VLAN associated with the Vsys is configured on the SF, a VLAN identifier associated with the Vsys is carried on a packet forwarded by the SFF to the SF by using the switch, and the SF determines, based on the VLAN identifier carried in the packet, the Vsys associated with the VLAN identifier, and performs corresponding service processing on the packet according to the application service policy corresponding to the Vsys, so that even if the new application service is added, multiplexing of an original SF to provide the newly added application service is implemented by combining the VLAN and the Vsys on the SF, thereby reducing networking costs, and improving resource utilization of the SF.

The method provided in the embodiments of the present disclosure is described above, and an apparatus provided in the embodiments of the present disclosure is described below.

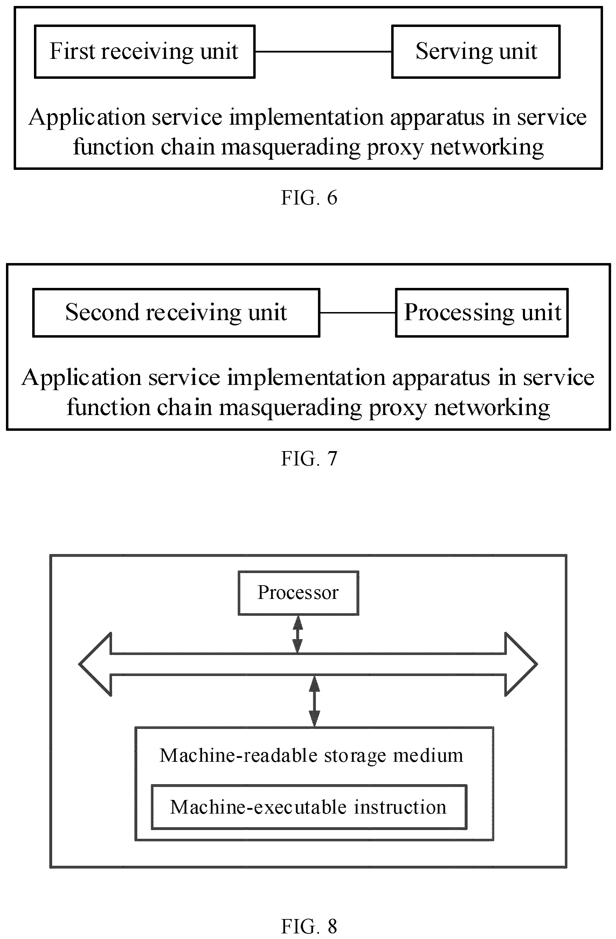

Referring to FIG. 6, FIG. 6 is a structural diagram of an application service implementation apparatus in service function chain masquerading proxy networking according to an embodiment of the present disclosure. The apparatus is applied to service function chain masquerading proxy networking. A switch is deployed between at least one node pair in the service function chain masquerading proxy networking, and the node pair includes a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different corresponding application service policies.

Optionally, in this embodiment, different Vsys are associated with different VLANs.

As shown in FIG. 6, the apparatus is applied to a SF, and the apparatus includes:
a first receiving unit, configured to receive, through a first interface of the SF, a first packet forwarded by the switch, where the first packet carries a first VLAN identifier, the first VLAN identifier is determined when the switch receives, through a second interface, the first packet forwarded by the SFF to the SF, and the first VLAN identifier is an identifier of a first VLAN supported by the second interface; and
a serving unit, configured to determine a first Vsys associated with the first VLAN identifier, and perform corresponding service processing on the first packet according to an application service policy corresponding to the first Vsys.

Optionally, after performing the corresponding service processing on the first packet, the serving unit is further configured to:
in response to determining to pass the first packet, replace the first VLAN identifier carried in the first packet with a second VLAN identifier associated with the first Vsys in addition to the first VLAN identifier, to obtain a second packet; and
send the second packet through a third interface of the SF supporting the second VLAN, so that when the switch receives the second packet through a fourth interface supporting the second VLAN, the switch forwards the second packet to the SFF after removing the second VLAN identifier carried in the second packet.

Optionally, the first packet includes an SRv6 inner packet and an SRv6 header.

Performing, by the serving unit, the corresponding service processing on the first packet according to the application service policy corresponding to the first Vsys includes: when the SF is configured to perform the service processing on the SRv6 inner packet, performing the corresponding service processing on the SRv6 inner packet in the first packet according to the application service policy corresponding to the first Vsys; when the SF is configured to perform the service processing on the SRv6 header, performing the corresponding service processing on the SRv6 header in the first packet according to the application service policy corresponding to the first Vsys.

Optionally, interfaces of the SF for accessing the switch are layer 2 trunk ports, each of the layer 2 trunk ports is configured to support at least one VLAN supported by the SF, and each of the layer 2 trunk ports allows a packet carrying an identifier of the VLAN supported by the layer 2 trunk port to pass.

So far, the structural description of the apparatus shown in FIG. 6 is completed.

Referring to FIG. 7, FIG. 7 is a structural diagram of another application service implementation apparatus in service function chain masquerading proxy networking according to an embodiment of the present disclosure. The apparatus is applied to service function chain masquerading proxy networking. A switch is deployed between at least one node pair in the service function chain masquerading proxy networking, and the node pair includes a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different corresponding application service policies.

Optionally, in this embodiment, different Vsys are associated with different VLANs.

As shown in FIG. 7, the apparatus includes:
a second receiving unit, configured to receive, through a second interface, a first packet forwarded by the SFF to the SF; and
a processing unit, configured to forward the first packet to the SF after adding a first VLAN identifier to the first packet based on the first VLAN supported by the second interface, so that the SF receives the first packet carrying the first VLAN identifier through a first interface of the SF and determines a first Vsys associated with the first VLAN identifier, and performs corresponding service processing on the first packet according to an application service policy corresponding to the first Vsys.

Optionally,

The second receiving unit is further configured to receive a second packet through a fourth interface, where the second packet is obtained by replacing the first VLAN identifier carried in the first packet with a second VLAN identifier by the SF after the SF performs the corresponding service processing on the first packet and determines to pass the first packet, where the second VLAN identifier is an identifier of a second VLAN associated with the first Vsys in addition to the first VLAN; and the fourth interface supports the second VLAN;
the processing unit is further configured to: forward the second packet to the SFF after removing the second VLAN identifier carried in the second packet;
forwarding, by the processing unit, the second packet to the SFF after removing the second VLAN identifier carried in the second packet includes: determining that a fifth interface of the switch, in addition to the fourth interface, supports the second VLAN, and the fifth interface is configured as a layer 2 access port, and forwarding the second packet to the SFF through the fifth interface after removing the second VLAN identifier carried in the second packet.

Optionally, forwarding the first packet to the SF after adding the first VLAN identifier to the first packet includes: forwarding the first packet carrying the first VLAN identifier to the SF through a sixth interface of the switch supporting the first VLAN after adding the first VLAN identifier to the first packet;
where the sixth interface is configured as a layer 2 trunk port, allowing the first packet carrying the first VLAN identifier to pass; and the second interface is configured as a layer 2 access port.

So far, the structural description of the apparatus shown in FIG. 7 is completed.

An embodiment of the present disclosure further provides a hardware structure of the above apparatus. FIG. 8 is a structural diagram of an electronic device according to an embodiment of the present disclosure. As shown in FIG. 8, the hardware structure may include: a processor and a machine-readable storage medium, where the machine-readable storage medium stores a machine-executable instruction executable by the processor; and the processor is configured to execute the machine-executable instruction, to implement the method disclosed in the above examples of the present disclosure.

Based on a same application concept as the above method, an embodiment of the present disclosure further provides a machine-readable storage medium, where the machine-readable storage medium stores a plurality of computer instructions, and when the computer instructions are executed by a processor, the method disclosed in the above examples of the present disclosure can be implemented.

For example, the machine-readable storage medium may be any electronic, magnetic, optical, or other physical storage device, and may include or store information, such as executable instructions, data, or the like. For example, the machine-readable storage medium may be a random access memory (RAM), a volatile memory, a non-volatile memory, a flash memory, a storage drive (such as a hard disk drive), a solid state drive, any type of storage disk (such as an optical disk or a DVD), or a similar storage medium, or a combination thereof.

The system, apparatus, module or unit illustrated in the above embodiments may be specifically implemented by a computer chip or an entity, or implemented by a product having a certain function. A typical implementation device is a computer, and a specific form of the computer may be a personal computer, a laptop computer, a cellular phone, a camera phone, a smartphone, a personal digital assistant, a media player, a navigation device, an email transceiver device, a game console, a tablet computer, a wearable device, or a combination of any one of these devices.

For ease of description, the above apparatus is described by dividing functions into various units. Certainly, functions of the units may be implemented in one or more of software and/or hardware when implementing the present disclosure.

Those skilled in the art should understand that the embodiments of the present disclosure may be provided as a method, a system, or a computer program product. Thus, the present disclosure may take the form of an entirely hardware embodiment, an entirely software embodiment, or an embodiment combining software and hardware. Moreover, the embodiments of the present disclosure may take the form of a computer program product implemented on one or more computer usable storage medium (including but not limited to magnetic disk storage, CD-ROM, optical storage, etc.) including computer usable program code.

The present disclosure is described with reference to flowchart diagrams and/or block diagrams of methods, devices (systems), and computer program products according to embodiments of the present disclosure. It should be understood that each process and/or block in the flowchart and/or block diagram, and a combination of processes and/or blocks in the flowchart and/or block diagram may be implemented by using computer program instructions. These computer program instructions may be provided to a processor of a general purpose computer, a special purpose computer, an embedded processor or other programmable data processing apparatus to generate a machine, so that the instructions executed by the processor of the computer or other programmable data processing apparatus generate an apparatus for implementing functions specified in one or more processes in the flowchart and/or one or more blocks in the block diagram.

Moreover, these computer program instructions may also be stored in a computer readable memory that can direct a computer or other programmable data processing apparatus to operate in a specific manner, so that the instructions stored in the computer readable memory generate an article of manufacture including an instruction apparatus, and the instruction apparatus implements functions specified in one or more processes in the flowchart and/or one or more blocks in the block diagram.

These computer program instructions may also be loaded onto a computer or other programmable data processing apparatus, so that a series of operation steps are performed on the computer or other programmable apparatus to generate a computer-implemented process, so that the instructions executed on the computer or other programmable apparatus provide steps for implementing functions specified in one or more processes in the flowchart and/or one or more blocks in the block diagram.

The above is merely an embodiment of the present disclosure, and is not intended to limit the present disclosure. For those skilled in the art, the present disclosure may have various modifications and variations. Any modifications, equivalent substitutions, improvements, etc., made within the spirit and principle of the present disclosure shall fall within the scope of the claims of the present disclosure.

## Claims

1. An application service implementation method in service function chain masquerading proxy networking, wherein a switch is deployed between at least one node pair in the service function chain masquerading proxy networking, and the node pair comprises a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the method comprises:
receiving, by the SF through a first interface of the SF, a first packet forwarded by the switch, wherein the first packet carries a first VLAN identifier, the first VLAN identifier is determined when the switch receives, through a second interface, the first packet forwarded by the SFF to the SF, and the first VLAN identifier is an identifier of a first VLAN supported by the second interface; and
determining, by the SF, a first Vsys associated with the first VLAN identifier, and performing corresponding service processing on the first packet according to an application service policy corresponding to the first Vsys.

2. The method according to claim 1, further comprising:
after performing the corresponding service processing on the first packet, in response to determining to pass the first packet, replacing, by the SF, the first VLAN identifier carried in the first packet with a second VLAN identifier to obtain a second packet, wherein the second VLAN identifier is an identifier of a second VLAN associated with the first Vsys in addition to the first VLAN; and
sending the second packet by the SF through a third interface of the SF supporting the second VLAN, so that when the switch receives the second packet through a fourth interface supporting the second VLAN, the switch forwards the second packet to the SFF after removing the second VLAN identifier carried in the second packet.

3. The method according to claim 1, wherein the first packet comprises an SRv6 inner packet and an SRv6 header;
performing the corresponding service processing on the first packet according to the application service policy corresponding to the first Vsys comprises:
when the SF is configured to perform the service processing on the SRv6 inner packet, performing the corresponding service processing on the SRv6 inner packet in the first packet according to the application service policy corresponding to the first Vsys;
when the SF is configured to perform the service processing on the SRv6 header, or when the SF is neither configured to perform the service processing on the SRv6 header nor the SRv6 inner packet, performing the corresponding service processing on the SRv6 header in the first packet according to the application service policy corresponding to the first Vsys.

4. The method according to claim 2, wherein,
the first interface of the SF through which the SF receives the first packet is a layer 2 trunk port;
the first interface is configured to allow a packet carrying the first VLAN identifier to pass;
the third interface is a layer 2 trunk port, and the third interface is configured to allow a packet carrying the second VLAN identifier to pass.

5. An application service method in service function chain masquerading proxy networking, wherein a switch is deployed between at least one node pair in the service function chain masquerading proxy networking, and the node pair comprises a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the method comprises:
receiving, by the switch through a second interface, a first packet forwarded by the SFF to the SF; and
forwarding, by the switch, the first packet to the SF after adding a first VLAN identifier to the first packet based on the first VLAN supported by the second interface, so that the SF receives the first packet carrying the first VLAN identifier through a first interface of the SF and determines a first Vsys associated with the first VLAN identifier, and performs corresponding service processing on the first packet according to an application service policy corresponding to the first Vsys.

6. The method according to claim 5, further comprising:
receiving, by the switch, a second packet through a fourth interface, wherein the second packet is obtained by replacing the first VLAN identifier carried in the first packet with a second VLAN identifier by the SF after the SF performs the corresponding service processing on the first packet and determines to pass the first packet, wherein the second VLAN identifier is an identifier of a second VLAN associated with the first Vsys in addition to the first VLAN; and the fourth interface supports the second VLAN; and
forwarding, by the switch, the second packet to the SFF after removing the second VLAN identifier carried in the second packet.

7. The method according to claim 6, wherein forwarding, by the switch, the second packet to the SFF after removing the second VLAN identifier carried in the second packet comprises:
determining, by the switch, that a fifth interface of the switch, in addition to the fourth interface, supports the second VLAN, and the fifth interface is configured as a layer 2 access port, and forwarding the second packet to the SFF through the fifth interface after removing the second VLAN identifier carried in the second packet.

8. The method according to any one of claims 5-7, wherein forwarding the first packet to the SF after adding the first VLAN identifier to the first packet comprises: forwarding the first packet carrying the first VLAN identifier to the SF through a sixth interface of the switch supporting the first VLAN after adding the first VLAN identifier to the first packet;
wherein the sixth interface is configured as a layer 2 trunk port, allowing the first packet carrying the first VLAN identifier to pass; and the second interface is configured as a layer 2 access port.

9. An application service implementation apparatus in service function chain masquerading proxy networking, wherein a switch is deployed between at least one node pair in the service function chain masquerading proxy networking, and the node pair comprises a service function forwarder (SFF) and a service function (SF); the switch and the SF support same N virtual local area networks (VLANs), N being greater than 1; the SF is virtualized with virtual systems (Vsys), and each of the Vsys is associated with at least two VLANs supported by the SF; different Vsys are configured with different application service policies; and the apparatus is applied to the SF, and comprises:
a first receiving unit, configured to receive, through a first interface of the SF, a first packet forwarded by the switch, wherein the first packet carries a first VLAN identifier, the first VLAN identifier is determined when the switch receives, through a second interface, the first packet forwarded by the SFF to the SF, and the first VLAN identifier is an identifier of a first VLAN supported by the second interface; and
a serving unit, configured to determine a first Vsys associated with the first VLAN identifier, and perform corresponding service processing on the first packet according to an application service policy corresponding to the first Vsys.

10. The apparatus according to claim 9, wherein after performing the corresponding service processing on the first packet, the service unit is further configured to:
in response to determining to pass the first packet, replace the first VLAN identifier carried in the first packet with a second VLAN identifier associated with the first Vsys in addition to the first VLAN identifier, to obtain a second packet; and
send the second packet through a third interface of the SF supporting the second VLAN, so that when the switch receives the second packet through a fourth interface supporting the second VLAN, the switch forwards the second packet to the SFF after removing the second VLAN identifier carried in the second packet.

11. The apparatus according to claim 9, wherein the first packet comprises an SRv6 inner packet and an SRv6 header;
performing, by the serving unit, the corresponding service processing on the first packet according to the application service policy corresponding to the first Vsys comprises: when the SF is configured to perform the service processing on the SRv6 inner packet, performing the corresponding service processing on the SRv6 inner packet in the first packet according to the application service policy corresponding to the first Vsys; when the SF is configured to perform the service processing on the SRv6 header, performing the corresponding service processing on the SRv6 header in the first packet according to the application service policy corresponding to the first Vsys; and/or,
interfaces of the SF for accessing the switch are layer 2 trunk ports, each of the layer 2 trunk ports is configured to support at least one VLAN supported by the SF, and each of the layer 2 trunk ports allows a packet carrying an identifier of the VLAN supported by the layer 2 trunk port to pass.

12. An application service implementation apparatus in service function chain masquerading proxy networking, wherein a switch is deployed between at least one node pair in the service function chain masquerading proxy networking, and the node pair comprises a service function forwarder (SFF) and a service function (SF); the switch and the SF support same N virtual local area network (VLAN) identifiers, N being greater than 1; the SF is virtualized with virtual systems (Vsys), and each of the Vsys is associated with at least two VLAN identifiers supported by the SF; different Vsys are configured with different application service policies; and the apparatus comprises:
a second receiving unit, configured to receive, through a second interface, a first packet forwarded by the SFF to the SF; and
a processing unit, configured to forward the first packet to the SF after adding a first VLAN identifier to the first packet based on the first VLAN supported by the second interface, so that the SF receives the first packet carrying the first VLAN identifier through a first interface of the SF and determines a first Vsys associated with the first VLAN identifier, and performs corresponding service processing on the first packet according to an application service policy corresponding to the first Vsys.

13. The apparatus according to claim 12, wherein the second receiving unit is further configured to: receive a second packet through a fourth interface, wherein the second packet is obtained by replacing the first VLAN identifier carried in the first packet with a second VLAN identifier by the SF after the SF performs the corresponding service processing on the first packet and determines to pass the first packet, wherein the second VLAN identifier is an identifier of a second VLAN associated with the first Vsys in addition to the first VLAN; and the fourth interface supports the second VLAN;
the processing unit is further configured to: forward the second packet to the SFF after removing the second VLAN identifier carried in the second packet;
forwarding, by the processing unit, the second packet to the SFF after removing the second VLAN identifier carried in the second packet comprises: determining that a fifth interface of the switch, in addition to the fourth interface, supports the second VLAN, and the fifth interface is configured as a layer 2 access port, and forwarding the second packet to the SFF through the fifth interface after removing the second VLAN identifier carried in the second packet.

14. The apparatus according to claim 12 or 13, wherein forwarding the first packet to the SF after adding the first VLAN identifier to the first packet comprises: forwarding the first packet carrying the first VLAN identifier to the SF through a sixth interface of the switch supporting the first VLAN after adding the first VLAN identifier to the first packet;
wherein the sixth interface is configured as a layer 2 trunk port, allowing the first packet carrying the first VLAN identifier to pass; and the second interface is configured as a layer 2 access port.

15. An electronic device, comprising: a processor and a machine-readable storage medium;
the machine-readable storage medium stores a machine-executable instruction executable by the processor; and
the processor is configured to execute the machine-executable instruction to implement the method according to any one of claims 1-8.

16. A machine-readable storage medium, storing a machine-executable instruction executable by a processor;
the machine-executable instruction is executed by the processor to implement the method according to any one of claims 1-8.
